# EUROPÄISCHE PATENTSCHRIFT

(11) **EP 1 456 619 B1**
(45) Veröffentlichungstag und Bekanntmachung des Hinweises auf die Patenterteilung: **10.03.2010**
(21) Anmeldenummer: 02796669.6
(22) Anmeldetag: 18.12.2002
(51) Int. Cl.: G01L 9/00, G01L 7/00, G01L 19/06

(54) **DRUCKSENSOR MIT HYDROPHOBER BESCHICHTUNG**
HYDROPHOBICALLY COATED PRESSURE SENSOR
CAPTEUR DE PRESSION COMPRENANT UN REVETEMENT HYDROPHOBE

(30) Priorität: 21.12.2001 DE 10163567
(43) Veröffentlichungstag der Anmeldung: 15.09.2004
(73) Patentinhaber: Endress + Hauser GmbH + Co. KG, 79689 Maulburg (DE)
(72) Erfinder: HEGNER, Frank, 79540 Lörrach (DE); DREWES, Ulfert, 79379 Müllheim (DE); ROSSBERG, Andreas, 79713 Bad Säckingen (DE); SCHMIDT, Elke, 79650 Schopfheim (DE)
(74) Vertreter: Andres, Angelika Maria
(86) Internationale Anmeldenummer: PCT/EP2002/014443
(87) Internationale Veröffentlichungsnummer: WO 2003/054499

(56) Entgegenhaltungen:
- EP-A- 0 262 323
- EP-A- 1 061 351
- EP-A- 1 207 378
- US-A- 4 996 082
- US-A- 5 261 960
- US-A- 5 318 928
- BRYANT W A: "REVIEW THE FUNDAMENTALS OF CHEMICAL VAPOUR DEPOSITION" JOURNAL OF MATERIALS SCIENCE, CHAPMAN AND HALL LTD, GB, Bd. 12, Nr. 7, 1977, Seiten 1285-1306, XP000613087 ISSN: 0022-2461
- PATENT ABSTRACTS OF JAPAN vol. 1996, no. 11, 29. November 1996 (1996-11-29) & JP 08 189870 A (NAGANO KEIKI SEISAKUSHO LTD), 23. Juli 1996 (1996-07-23)

## Beschreibung

Die vorliegende Erfindung betrifft einen Relativdrucksensor mit einer hydrophoben Beschichtung. Reiativdrucksensoren messen gewöhnlich die Differenz zwischen dem Druck in einem Meßmedium und dem aktuellen Atmosphärendruck. Ein Reiativdrucksensor umfaßt im allgemeinen einen Grundkörper an dem eine Meßmembran mit ihrem Rand druckdicht befestigt ist, wobei zwischen der Meßmembran und dem Grundkörper eine Druckkammer ausgebildet ist. Zur Relakivdruckmessung wird die Referenzluft über eine grundkörperseitige Öffnung in die Druckkammer geleitet, und die der Meßkammer abgewandte Oberfläche der Meßmembran wird mit dem Meßdruck beaufschlagt. Die resultierende Verformung der Meßmembran ist ein Maß für den Relativdruck, welches in geeigneter Weise in ein Meßsignal gewandelt wird.

Die erwähnte Zufuhr der Referenzluft bedingt, daß Feuchte in die Druckkammer gelangt, die bei Unterschreitung des Taupunktes im Inneren des Sensors kondensieren und die Funktion des Sensors beeinträchtigen kann. Dies ist insbesondere dann der Fall, wenn die Umgebungsluft des Sensors eine höhere Temperatur aufweist als das Medium, dessen Druck zu messen ist.

Selbst wenn es noch nicht zur makroskopischen Kondensation mit den unerwünschten Nebenwirkungen kommt, so ist bereits ein Anteil der Wassermoleküle aus der Gasphase an den Oberflächen im Inneren des Sensors adsorbiert, wobei dieser Anteil eine Funktion der Temperatur der jeweiligen Oberflächen und der Adsorptionsenergie zwischen der Oberfläche und einem Wassermolekül ist. Je größer die Adsorptionsenergie, um so mehr Wassermoleküle werden an den Oberflächen im Inneren des Sensors angereichert.

Bei keramischen Drucksensoren sind die beschriebenen Probleme noch durch herstellungsbedingte Materialeigenschaften verschärft, die nachfolgend erläutert werden. Ausgangsteile für Meßmembran und Grundkörper sind sogenannte Grünkörper, die aus einem pulverförmigen Ausgangsmaterial und einem Bindemittel vorgeformt und anschließend gesintert werden, so daß aus den Grünkörpern Sinterkörper entstehen. Das Keramikmaterial kann z.B. Aluminiumoxid sein. Die Sinterkörper müssen in der Regel geschliffen oder geläppt werden, dadurch haben sie nicht nur rauhe Oberflächen, sondern können auch feine Haarrisse aufweisen.

Um aus einem Membran-Sinterkörper und aus einem Grundkörper-Sinterkörper einen Drucksensor herzustellen, werden Grundkörper und Membran mit einander zugewandten Oberflächen unter Einfügung eines Abstandhalters am Rand verlötet oder hartverlötet, so daß die erwähnte Kammer gebildet wird. Dabei kann das verwendete Lot oder Aktivhartlot selbst als Abstandshalter dienen. Als Lot dient z.B. eine Glasfritte, als Aktivhartlot z.B. eine NiTiZr-Legierung, in der der NiZr-Anteil etwa gleich dem NiZr-Eutektikum ist, vgl. die US-A 5 334 344. Das Verlöten oder Hartverlöten wird auch als Fügen bezeichnet.

Vor dem Fügen von Membran und Grundkörper werden auf die nach dem Fügen in der Kammer einander zugewandten Oberflächen Elektroden aufgebracht. Diese bestehen z.B. aus Tantal, vgl. die US-A 5 050 034, und werden üblicherweise durch Sputtern aufgebracht. Beim Sputtern läßt es sich aber nicht vermeiden, daß durch sogenanntes Untersputtern auf der von Elektrodenmaterial freizuhaltenden Oberfläche trotzdem winzige Inseln von Elektrodenmaterial entstehen, die untereinander keinen elektrischen Kontakt haben.

Da sich sowohl Wassermoleküle der Referenzluft an der rauhen Oberfläche anlagern als auch in die Haarrisse eindringen können, entstehen zwischen den einzelnen Inseln aus Elektroden-Material elektrische Verbindungen, so daß sich die Fläche der Grundkörper-Elektrode vergrößert. Das in den Haarrissen aufgrund der Kapillarkondensation vorhandene Wasser beeinflußt mit seiner Dielektrizitätskonstanten ebenso die wirksamen Elektrodenflächen. Dies führt aber zu einem Offset des Nullpunkts des Drucksensors. Dieser Effekt wird umso größer, je höher die relative Feuchte der Referenzluft ist.

Die geschilderte Problematik wird in Grenzen dadurch relativiert, daß auf die fertigen Elektroden eine Spin-On-Gtas-Schicht aus Siliciumdioxid aufgebracht wird, die an sich vorrangig der Behebung einer anderen Problematik dient, siehe die US-A 5 400 489.

Damit sind jedoch nur relative Feuchten bis zu etwa 80% beherrschbar. So können derartige Drucksensoren bei einer relativen Feuchte von 80%, bezogen auf 40 °C, einen Offset des Nullpunkts von bis zu 1% der Spanne haben. Für hochgenaue Messungen ist dies nicht akzeptabel.

Zur Verbesserung der Toleranz gegenüber einer erhöhten relativen Luftfeuchtigkeit schlägt die europäische Patentanmeldung EP 1 061 351 vor, die Oberflächen im Inneren eines Sensors mit einem hydrophoben Material zu beschichten, wobei hierzu bevorzugt Silane Verwendung finden sollen.

Insbesondere bei keramischen Relativdrucksensoren kommt bei der Herstellung des Sensors erschwerend hinzu, daß die Imprägnierung erst nach der Verbindung der Trennmembran mit dem Grundkörper erfolgen kann, da die bei der Verbindung auftretenden Temperaturen zu hoch für das organische Beschichtungsmaterial sind. Das Beschichtungsmaterial muß daher durch die grundkörperseitige Öffnung in die Druckkammer eingebracht werden.

Das Patent US 5 318 928 A offenbart ein Verfahren zur elektrischen und mechanischen Oberflächenpassivierung von Halbleitersensoren, durch Beschichtung Oberflächen mit einer Materialschicht nach dem CVD-Verfahren. Das Patent US 4 996 082 A offenbart einen Absolutdrucksensor, bei dem Öffnungen einer evakuierten Druckkammer mittels Gasphasenabscheidung abgedichtet werden, um die Druckkammer von der Atmosphäre zu trennen. Damit erscheint dieser Ansatz für Relativdrucksensoren ungeeignet, da bei diesen die Druckkammer gerade mit dem Atmosphärendruck zu beaufschlagen ist.

Die Anmelderin stellt Relativdrucksensoren her, die mit einer Silanschicht imprägniert sind, wobei die Silane mittels eines Lösungsmittels mit einem hohen Dampfdruck in die Druckkammer eingebracht werden. Wenngleich diese Imprägnierungen schon eine erhebliche Verbesserung gegenüber Drucksensoren ohne Imprägnierungen darstellen, so ist doch noch Raum für Verbesserungen hinsichtlich der Qualität der hydrophoben Schichten gegeben.

Es ist daher die Aufgabe der vorliegenden Erfindung, einen Relativendrucksensor, welcher eine verbesserte hydrophobe Beschichtung aufweist bereitzustellen.

Die Aufgabe wird erfindungsgemäß gelöst durch den Drucksensor gemäß dem unabhängigen Anspruch 1.

Der erfindungsgemäße Relativdrucksensor zum Messen der Differenz eines Messdrucks gegenüber einem Umgebungsdruck, mit
einer Sensorkammer; und
einem Verformungskörper, der mit einem unter dem Messdruck stehenden Medium beaufschlagbar ist, und der ferner die Sensorkammer zumindest teilweise begrenzt diese von dem Medium druckdicht abschließt,
wobei die Wände der Sensorkammer eine hydrophobe Beschichtung aufweisen, ist **dadurch gekennzeichnet, dass**
die hydrophobe Beschichtung durch Gasphasenabscheidung aufgebracht wurde, wobei, die Sensorkammer eine Kammeröffnung aufweist. über welche sie mit einem Referenzdruck beaufschlagbar ist, und die Gasphasenabscheidung durch die Kammeröffnung erfolgte.

Die hydrophobe Beschichtung weist vorzugsweise Silane auf. Insbesondere sind Silane mit einer oder mehreren hydrophoben Gruppen R und einer oder mehreren Verankerungsgruppen X geeignet. Besonders Bevorzugt sind: R-Si-X₃, R₁ R₂-Si-X₂, R₁R₂R₃-Si-X. Die hydrophobe Gruppe R ist bevorzugt eine Alkyl-. Perfluoralky-, Phenyl-, oder Perfluorphenylgruppe. Die Verankerungsgruppe X ist bevorzugt ein -OH (Silanol), -X (Halogenid, z.B. -Cl), -OR (Ester, z.B. -OCH₃), - NH₂ (Amin), oder-SH (Mercaptosilan). Weiterhin können aliphatische oder cyclische Silazane -Si-NH-Si-, z.B. Hexamethyldisilazan, verwendet werden. Ebenfalls geeignet sind Verbindungen des Typs R_{y}-Me-X_{z} mit Me = z.B. Zr, Ti.

Der erfindungsgemäße Drucksensor ist ein Relativdrucksensor, wobei die Gasphasenabscheidung durch eine Druckkammeröffnung zur Referenzluftzufuhr erfolgt.

Wenngleich der Verformungskörper grundsätzlich eine beliebige Form aufweisen kann, so sind grundsätzlich Membranen als Verformungskörper bevorzugt, die mit ihrem Rand unter Ausbildung der Druckkammer an einem Grundkörper befestigt sind.

Die vorliegende Erfindung ist generell für beliebige Relativendrucksensoren geeignet, jedoch ist sie aus den oben dargelegten Gründen von besonderer Bedeutung für Drucksensoren mit einem keramischen Grundkörper und einer keramischen Meßmembran. Besonders relevant ist die Erfindung für Relativendrucksensoren, die eine Korundkeramik aufweisen.

Ein Verfahren zur Beschichtung eines Relativendrucksensors mit einem hydrophoben Material umfaßt die Schritte Einbringen des Sensors in eine Kammer; Evakuieren der Kammer; und Bereitstellen mindestens einer Beschichtungsgasphase, wobei die Temperatur des Relativendrucksensors Tₛ so eingestellt ist, daß Moleküle aus der ersten Beschichtungsgasphase auf Flächen des Relativendrucksensors adsorbieren können.

Vorzugsweise umfaßt das Verfahren die Beschichtung der Wände einer Druckkammer im Inneren des Relativendrucksensors, wobei die Beschichtung über eine Öffnung in der Druckkammer erfolgt.

In einer bevorzugten Ausführungsform des Verfahrens wird die Kammer nach dem Bereitstellen der mindestens einen Beschichtungsgasphase evakuiert. Hierdurch wird das Ausdampfen nicht adsorbierter Moleküle aus der Druckkammer erleichtert. Diese Vorgehensweise ist jedoch nicht essentiell für das erfindungsgemäße Verfahren sondern nur eine Option. Die Kammer kann nach dem Bereitstellen der mindestens einen Beschichtungsgasphase auch mit einem Gas gespült**,** wobei die Spülung vorzugsweise nach der Evakuierung der Kammer erfolgt. Jedoch ist auch diese Spülung nicht essentiell für die vorliegende Erfindung.

Nach der Adsorption des hydrophoben Materials kann die Temperatur Tₛ des Drucksensors erhöht werden, um eine Modifizierung des adsorbierten Materials und dessen chemische Haftung zum Substrat zu bewirken. Zudem kann auf diese Weise die Verdampfung von überschüssigem Material aus der Druckkammer bewirkt werden.

Die Wände der Kammer werden bevorzugt bei einer Temperatur Tₖ gehalten werden, die eine Kondensation der Moleküle der mindestens einen Beschichtungsgasphase verhindert und Adsorption minimiert.

In einer Variante werden die Relativendrucksensoren in einer Kammer bedampft, in der die Gasphase über geeignete Kanäle gezielt den jeweiligen Druckkammern der Relativendrucksensoren zugeführt wird, Hierdurch wird nur der Innenraum der Relativendrucksensoren bedampft.

In einer anderen Variante werden die Relativendrucksensoren so angeordnet, daß nicht nur das Sensorinnere sondern auch die äußeren Oberflächen des Relativendrucksensors bedampft werden. Dies ist insbesondere dann vorteilhaft, wenn ein sogenanntes Hybridelement mit einem feuchteempfindlichen elektronischen Baustein auf dem Grundkörper des Sensors angeordnet ist.

In einer weiteren Variante wird die hydrophobe Beschichtung in einer Sequenz von zwei oder mehreren Adsorptionsschritten ausgebildet. Hierzu wird zunächst eine erste Gasphase angeboten, die eine Ankersubstanz enthält, welches an den Wänden der Druckkammer adsorbiert und chemisch gebunden wird. Anschließend wird eine zweite Substanz angeboten, die mit der Ankersubstanz reagiert, wodurch eine zweilagige hydrophobe Schicht ausgebildet wird. Gegebenfalls können nach diesem Prinzip weitere Schichten hinzugefügt werden.

Der Aufbau der hydrophoben Schicht aus mehreren Lagen ist zwar aufwendiger, jedoch kann er unter Umständen zu einer verbesserten Qualität der hydrophoben Beschichtung führen, da zur Erzielung einer gewünschten Funktionalität zwei oder mehr kurze Moleküle aneinander gebunden werden. Aufgrund der geringeren Masse der kürzeren Moleküle lassen diese sich leichter verdampfen und weisen auch bei Oberflächendiffusionsvorgängen eine größere Beweglichkeit auf als schwerere Moleküle, so daß Filme gleichmäßiger und ggf. sogar schneller ausgebildet werden können.

Weitere Vorteile und Gesichtspunkte der Erfindung ergeben sich aus der nachfolgenden Beschreibung eines Ausführungsbeispiels und den Zeichnungen.

Es zeigt:
Fig. 1 eine Aufsicht auf einen erfindungsgemäßen Relativendrucksensor; und
Fig. 2 eine Seitenansicht entlang der Linie AB durch den erfindungsgemäßen Relativendrucksensor.

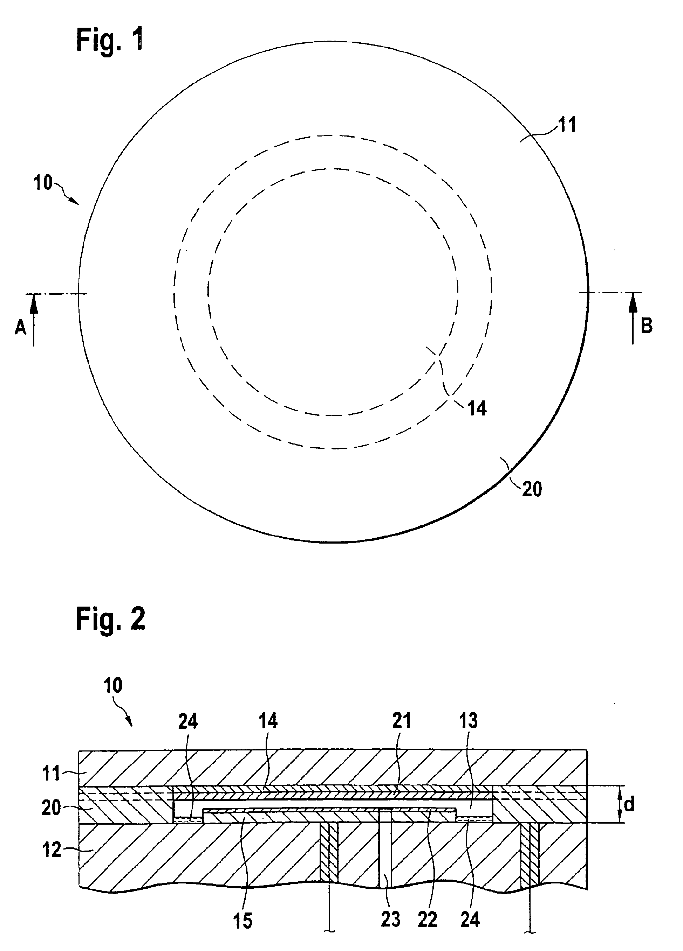

In den Fig. 1 und 2 ist ein kapazitiver keramischer Relativendrucksensor 10 dargestellt. Das keramische Material ist z.B. das oben erwähnte Aluminiumoxid von 96 Gew.% bis 99,9 Gew.% Reinheit. Der Relativendrucksensor 10 weist eine Membran 11 in Form einer kreisrunden Scheibe mit planparallelen Oberflächen auf. Ferner umfaßt der Drucksensor 10 einen Grundkörper 12, der, außer daß er dicker als die Membran 11 ist, von gleicher Form ist wie diese.

Membran 11 und Grundkörper 12 sind an ihrem jeweiligen Rand längs des gesamten Umfangs unter Zwischenlage eines Abstandshalters 20 in einem Abstand d miteinander wie oben erläutert hartverlötet. Dies geschieht in Hochvakuum bei einer Temperatur von etwa 900 °C. Aufgrund des Abstandes d bilden Membran 11 und Grundkörper 12 eine Kammer 13. Die Membran 11 ist dünn und elastisch, so daß sie sich unter einem auf sie einwirkenden Druck durchbiegen und somit hin- und herbewegen kann.

An einander zugewandten Oberflächen von Membran 11 und Grundkörper 12 sind Elektroden 14 bzw. 15 aufgebracht, die bevorzugt aus Tantal bestehen und an ihren einander zugewandten Oberflächen mit einer Schutzschicht 21 bzw. 22 aus Tantaldioxid bedeckt sind, vgl. wie dies in der erwähnten US-A 50 50 034 erläutert ist. Anstatt einer einzigen Elektrode 15 auf dem Grundkörper 12 können auch mehrere Elektroden auf ihm vorgesehen werden.

Allerdings ist die Oberfläche des Grundkörpers 12 vor dem Aufbringen der Elektrode 15 zusätzlich zum üblichen Schleifen oder optionalem Läppen poliert worden, um die danach noch bestehende Rauhigkeit weiter zu verringern, was einen ersten Schritt zur Lösung der Aufgabe der Erfindung ist. Bevorzugt wird auf eine Rauhigkeit von kleiner als 0,05 µm poliert. Durch dieses Polieren wird die Akzeptanz der Oberfläche für die oben erwähnte nachteilige Anlagerung von Wassermolekülen erheblich verringert. Das Polieren ist jedoch nicht zwingend erforderlich, wenn eine hydrophobe Imprägnierung zum Einsatz kommt.

Die Elektrode 14 bedeckt die Membran 11 vollständig und verbindet sich somit beim Fügen mit dem Abstandshalter 20 aus einem Aktivhartlot. Die Elektrode 15 des Grundkörpers 12 ist im Gegensatz dazu so aufgebracht, daß sie mit dem Abstandhalter 20 elektrisch nicht verbunden ist. Die Elektroden 14, 15 werden durch das erwähnte Sputtern aufgebracht, das bei der Elektrode 15 des Grundkörpers 12 durch die erläuterte Maske hindurch erfolgt.

Im Grundkörper 12 ist schließlich noch eine Bohrung 23 angebracht, die z.B. bereits in der Grünkörperphase erzeugt worden ist. Die Bohrung 23 reicht durch die Elektrode 15 hindurch, da die kammerseitige Öffnung durch das Aufsputtern der Elektrode 15 nicht verschlossen wird. Somit ist die Druckkammer 13 nicht verschlossen, sondern steht mit außen in Verbindung, was ja die Grundvoraussetzung eines Relativdruck-Sensors ist.

Da sich das erwähnte Untersputtem selbst bei der polierten Oberfläche des Grundkörpers 12 nicht vermeiden läßt, wird die Druckkammer 13 eines jeden fertig gefügten Drucksensors 10 mit einer durch die Bohrung 23 eingebrachten dünnen Schicht 24 aus einem hydrophoben Material von innen bedeckt. Die Schicht 24 ist in die Fig. 2 aus Übersichtlichkeitsgründen nur an der nicht von der Elektrode 15 bedeckten Oberfläche des Grundkörpers 12 eingezeichnet. Die Schicht 24 bedeckt jedoch sämtliche das Volumen der Druckkammer 13 begrenzenden Flächen.

Durch die hydrophobe Schicht 24 werden vor allem nicht nur die durch das Untersputtern wie oben erläutert entstandenen Inseln aus Elektroden-Material, sondern auch die zwischen diesen Inseln liegenden Oberflächenteile des Grundkörpers 12 mit der nach der Hartbearbeitung, d.h. dem Schleifen und / oder dem Polieren, verbliebenen Rauhigkeit und mit den Haarrissen gegen jede Wasseranlagerung passiviert. Somit ist die erwähnte Vergrößerung der Elektrodenfläche praktisch vollständig ausgeschlossen, wie die oben bei den Vorteilen angegebenen Meßwerte zeigen.

Das Aufbringen der hydrophoben Beschichtung erfolgt in dem vorzugsweise eine Charge von mehreren Drucksensoren in eine Kammer eingebracht wird.

Eine Vorbehandlung der Zellen ist nicht erforderlich, da die Oberflächen der Relativendrucksensoren aufgrund des erwähnten Sinter- und Füge-Hochvakuumprozesses extrem sauber sind. Dies ist eine ideale Voraussetzung für das gute Haften der hydrophoben Schicht 24.

Die Relativendrucksensoren werden auf eine Temperatur Tₛ gebracht welche einerseits die Oberflächendiffusion von den hydrophoben Molekülen zur Ausbildung einer geordneten Schicht ermöglicht und andererseits nicht sofort zu einer Desorption von adsorbierten hydrophoben Molekülen führt. Gleichermaßen ist eine Temperatur Tₛ möglich , die zu einer Kondensation der hydrophoben Moleküle führt. Dies bewirkt eine erhöhte Moleküldichte (überschüssiges Material kann nach der Bedampfung durch eine vorübergehende Erhöhung der Temperatur desorbiert werden).

Die Kammer wird zudem evakuiert, wobei für die vorliegenden Zwecke ein Druck von 1,0 mbar bis 0,001 mbar völlig ausreichend ist.

Anschließend wird eine Gasphase mit geeigneten hydrophoben Molekülen bereitgestellt, indem beispielsweise ein Behälter mit dem Material auf eine Temperatur gebracht wird, bei der das Material einen Dampfdruck von 1 mbar bis etwa 1 bar aufweist. Der Behälter ist entweder direkt in der Kammer oder in einer Seitenkammer angeordnet, die von der Kammer durch ein Plattenventil getrennt ist.

Optional ist der Behälter unter einer Trägerplatte angeordnet, welche zugleich den Behälter abdeckt, und mehrere Kanäle aufweist deren Durchmesser bevorzugt dem Durchmesser der Bohrung 23 entspricht. Die Relativendrucksensoren sind dabei auf der Trägerplatte angeordnet, wobei jeweils die Bohrung 23 eines Relativendrucksensors, durch welche die Beschichtung der Druckkammer erfolgt, mit einem der Kanäle fluchtet, der sich durch die Trägerplatte erstreckt, so daß das hydrophobe Material bevorzugt in die Druckkammer geleitet wird. Ggf. können die Kanäle durch einen Schieber geschlossen werden, wodurch die Bedampfungszeit für die Drucksensoren hinreichend genau gesteuert werden kann.

Nachdem die Bedampfung hinreichend lange erfolgt ist, kann die Kammer anschließend erneut evakuiert werden. Dies ist jedoch lediglich eine Option für das Verfahren und keinesfalls zwingend erforderlich.

Anschließend wird bei dieser Ausführungsform die Temperatur Tₛ der Drucksensoren erhöht, um ggf. überflüssiges Material desorbieren zu lassen und andererseits, um eine chemische Bindung des hydrophoben Materials an den Kammerwänden zu bewirken. Hierdurch sind die Wände der Druckkammer mit einer stabilen hydrophoben Schicht imprägniert, welche die gewünschte Verbesserung hinsichtlich der Anfälligkeit gegen Feuchtigkeit bewirkt.

## Patentansprüche

1. Relativdrucksensor zum Messen der Differenz eines Messdrucks gegenüber einem Umgebungsdruck, mit
einer Sensorkammer; und
einem Verformungskörper, der mit einem unter dem Messdruck stehenden Medium beaufschlagbar ist, und der ferner die Sensorkammer zumindest teilweise begrenzt diese von dem Medium druckdicht abschließt;
wobei die Wände der Sensorkammer eine hydrophobe Beschichtung aufweisen, **dadurch gekennzeichnet, dass**
die hydrophobe Beschichtung durch Gasphasenabscheidung aufgebracht wurde, wobei, die Sensorkammer eine Kammeröffnung aufweist, über welche sie mit einem Referenzdruck beaufschlagbar ist, und die Gasphasenabscheidung durch die Kammeröffnung erfolgte.

2. Relativendrucksensor nach Anspruch 1, weiterhin umfassend einen Grundkörper, wobei der Verformungskörper als Membran ausgebildet ist, die mit ihrem Rand unter Bildung der Sensorkammer zwischen dem Grundkörper und der Membran befestigt ist.

3. Relativendrucksensor nach Anspruch 2, wobei der Verformungskörper ein keramisches Material aufweist.

4. Relativendrucksensor nach Anspruch 3, wobei der Grundkörper, ein keramisches Material aufweist.

5. Relativendrucksensor nach Anspruch 4, wobei das keramische Material eine Aluminiumoxidkeramik, insbesondere Korund umfasst.

6. Relativendrucksensor nach einem der vorhergehenden Ansprüche, wobei der Drucksensor ein kapazitiver Drucksensor ist, der Elektroden in der Druckkammer aufweist.

7. Relativendrucksensor nach einem der vorhergehenden Ansprüche, wobei die hydrophobe Beschichtung Silane umfasst.

## Claims

1. Relative pressure sensor for measuring the difference between a measured pressure and an ambient pressure with:
- a sensor chamber, and
- a deformation element which can be exposed to a medium under the pressure of the measured pressure, and which borders the sensor chamber at least in part and seals the chamber pressure-tight from the medium.
- whereby the walls of the sensor chamber have a hydrophobic coating,
**characterized in that**
the hydrophobic coating has been applied using chemical vapor deposition, whereby the sensor chamber exhibits a chamber opening via which it can be exposed to a reference pressure and chemical vapor deposition takes place through the chamber opening.

2. Relative pressure sensor as per Claim 1, further comprising a meter body, whereby the deformation element is designed as a diaphragm, which is secured in place at the edge with the sensor chamber formed between the meter body and the diaphragm.

3. Relative pressure sensor as per Claim 2, **characterized in that** the deformation element exhibits a ceramic material.

4. Relative pressure sensor as per Claim 3, **characterized in that** the meter body exhibits a ceramic material.

5. Relative pressure sensor as per Claim 4, **characterized in that** the ceramic material comprises an aluminum oxide ceramic particularly corundum.

6. Relative pressure sensor as per one of the previous claims, **characterized in that** the pressure sensor is a capacitance pressure sensor that exhibits electrodes in the pressure chamber.

7. Relative pressure sensor as per one of the previous claims, **characterized in that** the hydrophobic coating comprises silane.

## Revendications

1. Capteur de pression relative destiné à la mesure de la différence d'une pression de mesure par rapport à une pression ambiante, avec
une chambre de capteur ; et
un corps de déformation, qui peut soumis à un produit se trouvant à la pression de mesure et qui, en outre, délimite au moins partiellement la chambre de capteur et l'obture de façon étanche à la pression du produit ;
pour lequel les parois de la chambre de capteur présentent un revêtement hydrophobe, **caractérisé en ce que**
le revêtement hydrophobe a été appliqué par dépôt chimique en phase vapeur, la chambre de capteur présentant une ouverture, par l'intermédiaire de laquelle la chambre peut être soumise à une pression de référence, et le dépôt chimique en phase vapeur ayant été effectué à travers l'ouverture de la chambre.

2. Capteur de pression relative selon la revendication 1, comprenant en outre un corps de base, ce dernier étant conçu sous la forme d'une membrane, laquelle est fixée par son bord en formant la chambre de capteur entre le corps de base et la membrane.

3. Capteur de pression relative selon la revendication 2, pour lequel le corps de déformation est constitué d'un matériau en céramique.

4. Capteur de pression relative selon la revendication 3, pour lequel le corps de base est constitué d'un matériau en céramique.

5. Capteur de pression relative selon la revendication 4, pour lequel le matériau en céramique est une céramique en oxyde d'aluminium, notamment en corindon.

6. Capteur de pression relative selon l'une des revendications précédentes, pour lequel le capteur de pression est un capteur de pression capacitif, qui présente des électrodes dans la chambre de pression.

7. Capteur de pression relative selon l'une des revendications précédentes, pour lequel le revêtement hydrophobe comprend du silane.
